# EUROPÄISCHE PATENTSCHRIFT

(11) **EP 0 877 989 B1**
(45) Veröffentlichungstag und Bekanntmachung des Hinweises auf die Patenterteilung: **10.09.2003**
(21) Anmeldenummer: 97950092.3
(22) Anmeldetag: 04.11.1997
(51) Int. Cl.: G06K 7/00

(54) **LESEGERÄT FÜR CHIPKARTEN**
READER FOR CHIP CARDS
LECTEUR POUR CARTES A PUCE

(30) Priorität: 04.11.1996 DE 29618976 U
(43) Veröffentlichungstag der Anmeldung: 18.11.1998
(73) Patentinhaber: Thomas & Betts GmbH, 63329 Egelsbach (DE)
(72) Erfinder: LOTZ, Reinhard, D-64390 Erzhausen (DE)
(74) Vertreter: Howick, Nicholas Keith
(86) Internationale Anmeldenummer: EP9706094
(87) Internationale Veröffentlichungsnummer: WO98020443

(56) Entgegenhaltungen:
- EP-A- 0 316 699
- EP-A- 0 715 272
- DE-A- 19 502 176
- DE-U- 29 618 976
- US-A- 4 904 852

## Beschreibung

Die Erfindung geht aus von einem Lesegerät für Chipkarten gemäß dem Oberbegriff des Patentanspruches 1. Ein solches Lesegerät ist zum Beispiel aus US-A-4 904 852 bekannt.

Bei den bekannten Lesegeräten dieser Art ist der den Stromkreis zwischen den Kontakten und den Lesespuren schließende Endschalter in Nachbarschaft des Kontaktträgers, in der Regel unmittelbar auf dem Kontaktträger derart, daß die Chipkarte beim Einschieben in den Kartenschlitz unmittelbar vor Erreichen der Endstellung einen der Kontakte des Endschalters mitnimmt und gegen den Gegenkontakt drückt. Die Anordnung hat sich funktionell im wesentlichen bewährt, die Lage des Endschalters im Endbereich der Chipkarte wird ungeachtet dessen insofern als nachteilig angesehen, als bei häufiger Betätigung, d.h. bei häufigem Einschieben und Ziehen der Karte das Auftreten von Kartenabrieb unvermeidbar ist, der sich insbesondere auf dem Gegenkontakt absetzt und eine Isolierung bis hin zur vollständigen Funktionsunterbrechung führen kann.

Der vorliegenden Erfindung liegt als Aufgabe die Schaffung eines Lesegerätes für Chipkarten zugrunde, bei dem die Verschmutzung der Kontakte durch Abrieb oder anderweitig mit der Karte eingetragenem Schmutz weitestgehend vermieden ist.

Diese Aufgabe wird mit einem Lesegerät mit den im Patentanspruch wiedergegebenen Merkmalen gelöst.

Durch die Erfindung ist ein Lesegerät für Chipkarten geschaffen, in dem der Endschalter in einer geschlossenen Kammer liegt, die weitestgehend hermetisch geschlossenen und damit gegen Staub-Zutritt praktisch vollständig gesichert ist. Darüberhinaus findet bei der Mitnahme aufgrund des einzuhaltenden Spiels zum Unterschied von den bekannten Endschalteranordnungen nach dem Aufsetzen des mitgenommenen Kontaktes auf dem Gegenkontakt ein Verschwenken beider Kontaktblättchen und damit aufgrund ihrer unterschiedlichen Schwenkradien unter Reibwirkung eine Verschiebung des Kontaktpunktes statt, durch die eine ständige Selbstreinigung des Kontaktfeldes des Schalters bewirkt wird.

Weitere Einzelheiten der in den Patentansprüchen gekennzeichneten Erfindung werden nachstehend anhand der beigefügten Zeichnung erläutert. Es zeigen
- Fig. 1: eine Sicht von oben auf das Gehäuse des Lesegerätes
- Fig. 2: eine Sicht von untern auf das in Fig. 1 wiedergegebene Lesegerät

Das in der Zeichnung wiedergegebene Lesegerät für Chipkarten besteht aus einem mittels eines - nicht dargestellten - Deckels verschlossenen Gehäuse 1, in das zum Zwecke der Betätigung die Chipkarte unter seitlicher Führung mittels der Blattfedern 2 in der durch den Pfeil bezeichneten Richtung eingeschoben wird. In dem Gehäuse ist ein Kontaktträger 3 mit einer der Zahl der Kontaktierungsfelder entsprechenden Zahl von mit einem Endschalter verbundenen Kontaktpaaren 4, 4a gehalten. Es ist weiterhin ein auf Führungen 5 geführter Schieber 6 vorgesehen, der im Beispielsfalle von einer Feder 7 in Richtung auf den Einschubschlitz beaufschlagt wird und einen Anschlag 8 aufweist, gegen den die Chipkarte mit ihrer vorderen Kante bei Annäherung an ihre (Lese)-Endstellung anschlägt. An dem Schieber sind weiterhin Schrägrampen 9 angeordnet, die mit an dem Kontaktträger 3 angeordneten Zapfen 10 derart zusammenwirken, daß bei Annäherung der Karte an ihre Endstellung der Schieber 6 mitgenommen wird und hierbei die auf den Zapfen 10 des Kontaktträgers 3 aufgleitenden Schrägrampen 9 eine Verschwenkung des Kontakträgers 3 und damit der Kontaktpaare 4, 4a derart bewirken, daß diese fest auf den auf der Karte angeordneten Chip gedrückt werden.

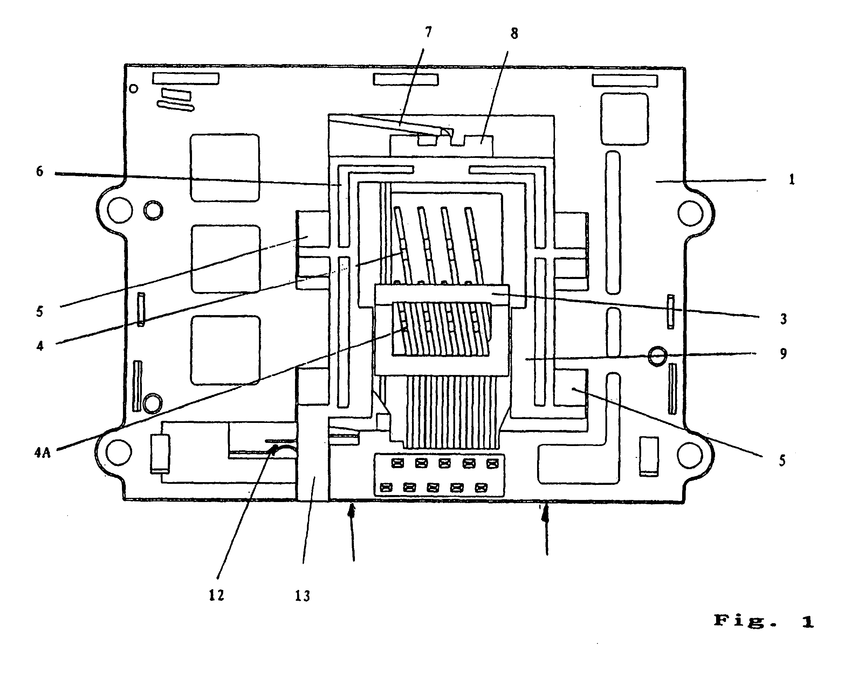

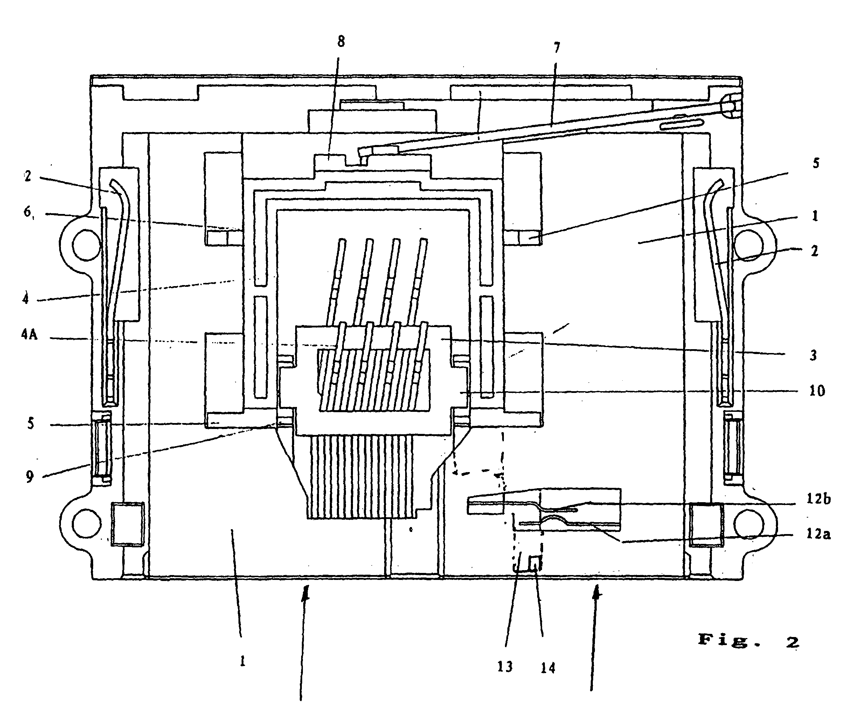

Der Endschalter 12 ist seitlich neben dem Kontaktträger 3 im Bereich zwischen der Schlitzöffnung für den Karteneinschub und dem Schieber 6 angeordnet, wobei der Schieber 6 vermittels eines die Kontakte übergreifenden Steges 13 (Fig. 1) mit einem Mitnehmer 14 (Fig. 2) versehen ist, der bei der Verschiebung des Schiebers 6 unter der Wirkung der eingeschobenen Karte zunächst an dem Kontakt 12a anschlägt, diesen auf seinem weiteren Weg bis zum Aufsitzen auf dem Kontakt 12b mitnimmt, wodurch die elektrisch leitende Verbindung hergestellt ist. Aus der Zeichnung ist zu erkennen, daß der Schalter in einer von dem Gehäuse 1 und dem - nicht dargestellten - Gehäusedeckel gebildeten Kammer liegt, die weitestgehend hermetisch geschlossenen und damit gegen Staub-Zutritt praktisch vollständig gesichert ist. Es ist weiterhin deutlich erkennbar, daß die beiden Kontakte 12a, 12b aufgrund der unterschiedlichen Lage ihrer Schwenkkreise nach dem Aufsetzen des Kontaktes 12a auf dem Gegenkontakt 12b unter reibender Verschiebung des Kontaktpunktes aufeinander abgleiten, wodurch mit jeder Betätigung gleichzeitig eine Selbstreinigung des Kontaktfeldes des Schalters herbeigeführt wird.

## Patentansprüche

1. Lesegerät für Chipkarten mit einem Gehäuse (1), in dem ein Kontaktträger (3) mit einer der Zahl der Lesespuren entsprechenden Zahl von über einen Endschalter (12) miteinander verbindbaren Kontaktpaaren (4, 4a) gehalten und ein von der Chipkarte betätigter, auf die Kontakte (4, 4a) bzw. den Kontaktträger (3) wirkender Schieber (6) derart geführt ist, daß bei Annäherung der Karte an ihre Endstellung einerseits mittels des Schiebers (6) die Kontakte (4, 4a) fest auf das das Kontaktierungsfeld des Chips gedrückt und andererseits der Endschalter (12) geschlossen werden, ***dadurch gekennzeichnet, daß*** der Endschalter (12) seitlich neben dem Kontaktträger (3) im Bereich zwischen der Schlitzöffnung für den Karteneinschub und dem Schieber (6) angeordnet ist und der Schieber (6) mit einem Mitnehmer (13, 14) versehen ist der die Kontakte (12a, 12b) des Endschalters auf der Seite der Schlitzöffnung für den Karteneinschub in einem solchen Abstand hintergreift, daß der Endschalter (12) bei der durch die Annäherung der Karte an ihre Endstellung bewirkten Mitnahme des Schiebers (6) geschlossen wird.

2. Lesegerät für Chipkarten nach Anspruch 1, ***dadurch gekennzeichnet, daß*** der Endschalter (12) von zwei schwenkbar gehaltenen Federblättchen (12a, 12b) gebildet ist

## Claims

1. Read apparatus for chip cards with a housing (1) in which a contact support (3), with a number of contact pairs (4, 4a) that corresponds to the number of read tracks and that can be connected by a limit switch (12), is held and a slide (6) operated by the chip card and acting on the contacts (4, 4a) or the contact support (3) is guided such that, upon moving the card close to its end position, the contacts (4, 4a) are pressed, on the one hand, firmly onto the contact field of the chip by means of the slide (6) and, on the other hand, the limit switch (12) is closed, **characterised in that**:
the limit switch (12) is arranged on the side next to the contact support (3) in the area between the card insertion slot and the slide (6), and **in that** the slide (6) is equipped with a tab (13, 14) which reaches behind the contacts (12a, 12b) of the limit switch on the side of the card insertion slot with a spacing such that the limit switch (12) is closed by the entrainment of the slide (6) brought about by the approach of the card to its end position.

2. Read apparatus for chip cards according to Claim 1, **characterised in that** the limit switch (12) is formed by two small leaf springs (12a, 12b) held so as to pivot.

## Revendications

1. Lecteur pour cartes à puce muni d'un boîtier (1) dans lequel un support de contacts (3) est tenu avec un nombre de paires de contacts (4, 4a) connectables ensemble par le biais d'un interrupteur de fin de course (12), correspondant au nombre de pistes de lecture et dans lequel un curseur (6) agissant sur les contacts (4, 4a) ou le support de contacts (3) et actionné par la carte à puce est guidé de telle sorte que, lors de l'approche de la carte au niveau de position finale, les contacts (4, 4a) sont fermement appuyés, d'un coté, au moyen du curseur (6), sur le champ d'établissement du contact de la puce, et sont fermés, de l'autre coté, par l'interrupteur de fin de course (12), **caractérisé en ce que** l'interrupteur de fin de course (12) est disposé, latéralement, à coté du support de contacts (3), dans la zone située entre la fente prévue pour insérer la carte et le curseur (6) et que le curseur (6) est muni d'un entraîneur (13, 14) qui saisit par derrière les contacts (12a, 12 b) de l'interrupteur de fin de course sur le coté de la fente prévue pour insérer la carte dans un tel espacement que l'interrupteur de fin de course (12) est fermé lors de l'entraînement du curseur (6) provoqué par l'approche de la carte au niveau de sa position finale.

2. Lecteur pour cartes à puce selon la revendication 1, **caractérisé en ce que** l'interrupteur de fin de course (12) est formé de deux petites lames de ressort (12a, 12b) maintenues de façon pivotante.
